# NEW EUROPEAN PATENT SPECIFICATION

(11) **EP 3 077 592 B2**
(45) Date of publication and mention of the opposition decision: **25.08.2021**
(45) Mention of the grant of the patent: 13.06.2018
(21) Application number: 14815783.7
(22) Date of filing: 04.12.2014
(51) Int. Cl.: D21C 5/00, D21C 9/00, D21H 11/16, D21H 11/18

(54) **METHOD FOR MAKING MODIFIED CELLULOSE PRODUCTS AND A MODIFIED CELLULOSE PRODUCT**
VERFAHREN ZUR HERSTELLUNG VON MODIFIZIERTEN PRODUKTE AUS CELLULOSE UND MODIFIZIERE PRODUKTE AUS CELLULOSE
PROCEDE DE FABRICATION DES PRODUITS A PARTIR DE LA CELLULOSE MODIFIÉE ET PRODUITS A PARTIR DE LA CELLULOSE MODIFIEE

(30) Priority: 05.12.2013 FI 20136235
(43) Date of publication of application: 12.10.2016
(73) Proprietor: UPM-Kymmene Corporation, 00100 Helsinki (FI)
(72) Inventor: KAJANTO, Isko, FI-02200 Espoo (FI); TAMPER, Juha, FI-54930 Levänen (FI); NUOPPONEN, Markus, FI-00220 Helsinki (FI); SINKKO, Tarja, FI-53500 Lappeenranta (FI); TIENVIERI, Taisto, FI-01600 Vantaa (FI)
(74) Representative: Berggren Oy
(86) International application number: PCT/FI2014/050955
(87) International publication number: WO 2015/082774

(56) References cited:
- WO-A1-01/29309
- WO-A1-2011/004300
- WO-A1-2011/141877
- WO-A1-2013/072559
- WO-A1-2013/076376
- WO-A1-2013/117823
- WO-A1-2013/150475
- WO-A1-2014/029909
- WO-A1-2014/029909
- WO-A1-2014/087052
- WO-A1-2014/174152
- WO-A1-2014/184438
- WO-A1-2015/007953
- WO-A2-2013/121104
- CA-A1- 2 856 151
- US-A- 4 481 077
- US-A- 4 481 077
- US-A1- 2004 004 804
- US-A1- 2012 135 506
- HENRIKSSON ET AL: "An environmentally friendly method for enzyme-assisted preparation of microfibrillated cellulose (MFC) nanofibers", EUROPEAN POLYMER JOURNAL, PERGAMON PRESS LTD. OXFORD, GB, vol. 43, no. 8, 4 August 2007 (2007-08-04) , pages 3434-3441, XP022183193, ISSN: 0014-3057, DOI: 10.1016/J.EURPOLYMJ.2007.05.038
- EYHOLZER, CH. et al.: "Preparation and characterization of water-redispersible nanofibrillated cellulose in powder form", Cellulose, vol. 17, 2010, pages 19-30,
- Isogai A.: "TEMPO-oxidized cellulosenanofibers"

## Description

### Field of the invention

The invention relates to a method for making modified cellulose products. The invention also relates to a modified cellulose product.

### Background of the invention

Cellulose is a renewable natural polymer that can be converted to many chemical derivatives. The derivatization takes place mostly by chemical reactions of the hydroxyl groups in the β-D-glucopyranose units of the polymer. By chemical derivatization the properties of the cellulose can be altered in comparison to the original chemical form while retaining the polymeric structure.

If cellulose in fibers is derivatized in a suitable way, the fibers are easier to disintegrate to the level of fibrils, nanofibrillar cellulose, because of weakened bonds between the fibrils. For this purpose the cellulose can be anionized or cationized. For example catalytic oxidation of cellulose by heterocyclic nitroxyl compounds (such as "TEMPO", i.e. 2,2,6,6-tetramethylpiperidinyl-1-oxy free radical) produces anionic cellulose where part of C-6 hydroxyl groups are oxidized to aldehydes and carboxylic acids. Another method to produce anionic cellulose is carboxymethylation of cellulose molecules. Cationic cellulose can be produced by adding quaternary ammonium groups to cellulose molecules.

In practice, pulp which contains cellulosic fibers in suspension is subjected to chemical modification to reach a suitable degree of substitution, whereafter the fibers are disintegrated to fibrils with nanofibrillar cellulose as product.

Nanofibrillar cellulose can be produced in a variety of ways, but the common feature is that the modified pulp is processed at a relatively low consistency. Consequently, the resulting nanofibrillar cellulose is a liquid dispersion with a correspondingly low concentration. The concentration of the nanofibrillar cellulose in the dispersion is usually below 5 wt-%, usually about 1 to 4 wt-%.

WO2013/072559 discloses a method for producing nanofibrils cellulose, wherein cellulose based fibre material, in which internal bonds in the cellulose fibre have been weakened by chemical modification, is introduced in a refining gap for separating fibrils. The fibre material is supplied at a consistency of 2-4%.

One of the most prominent physical properties of the nanofibrillar cellulose is that it forms a highly viscous gel in concentrations above 1%. Raising the concentration of this type of gel to decrease transportation costs from the manufacturing location is desirable. Although methods have been developed for lowering the water content of the gel, it requires time and energy, and increase the price of the nanofibrillar cellulose. With some grades of nanofibrillar cellulose, excessive dewatering or drying can even alter the properties of the nanofibrillar cellulose so that it has no longer the same rheological characteristics when it is redispersed in water at the location of use.

### Summary of the Invention

It is the purpose to provide a method for making modified cellulose products which allows better management of the production and transport chain.

The present disclosure provides a method for making modified cellulose products, comprising
- processing cellulose pulp to modified cellulose pulp, wherein the processing of cellulose pulp takes place by chemical modification, where anionized or cationized cellulose is obtained, at a manufacturing location, preferably at a pulp mill, to increase the susceptibility of fibers to disintegration,
- washing the modified cellulose pulp before transporting the modified cellulose pulp so that the measured conductivity of the modified cellulose pulp after washing, when suspended at a consistency of 2.5 wt-% in deionized water, is below 200 mS/m,
- setting the washed modified cellulose pulp to a suitable dry matter content, wherein the dry matter content of the modified cellulose pulp is set to 20 - 60 wt-%, and
- transporting the modified cellulose pulp at set dry matter content to a location of use, where the modified cellulose pulp is disintegrated to nanofibrillar cellulose having a zero-shear viscosity measured with a stress controlled rotational rheometer at a concentration of 0.5% (aqueous medium) between 1000 and 100000 Pa·s.

The present disclosure also provides a modified cellulose product which is modified cellulose pulp, which is chemically modified cellulose pulp where the cellulose is anionized or cationized cellulose, where the fibers have increased susceptibility to disintegration as a result of the modification, and wherein the measured conductivity of the modified cellulose pulp, when suspended at a consistency of 2.5 wt-% in deionized water, is below 200 mS/m, packed in a rigid container or in a bag, especially in a big bag (FIBC-type bag), in a dry matter content of 20 - 60 wt-%.

Cellulose in fibrous form, cellulose pulp, is first processed to modified cellulose pulp at the manufacturing location to increase the susceptibility of fibers to disintegration, and the modified cellulose in fibrous form is transported at a suitable dry matter content to the location of use, where the fibers are disintegrated to nanofibrillar cellulose ("on-site" fibrillation). The manufacturing location is the location where the cellulose pulp is modified, and it can be for example a chemical pulp mill which uses the chemical pulp produced by the mill as the raw material.

The modified cellulose in fibrous form exists as suspension or more or less dry mass after the cellulose has been processed to modified cellulose, depending on the modification method. As a result of the modification, the pulp contains residual substances, which must be removed from the modified cellulose pulp by washing. During the washing the modified cellulose pulp becomes an aqueous suspension, which is dewatered at the manufacturing location to dry matter content suitable for dispatch, whereafter the modified cellulose is transported in this dry matter content to the location of use.

In washing, the modified cellulose pulp is diluted with washing water, whereafter the washing water, together with the dissolved substances (such as salts) and possible other impurities carried by the water from the pulp, is removed mechanically from the pulp, for example by pressing. This can be repeated the required number of times so that the washed modified cellulose pulp has the content of residual substances below the required limit. The washing efficiency can also be expressed by conductivity, which is discussed later. After the washing, the modified cellulose pulp can be already at the dry matter content suitable for transport, or its dry mater content can be increased further, for example by air drying, where water is removed by evaporation.

Drying the modified cellulose in fibrous form does not affect the properties of the cellulose when it is dried to a suitable range, which is dependent on the modified cellulose grade. The degree of drying can also be dependent on the means of transport and the transport distance. After the transport, the fibres of the modified cellulose pulp can be dispersed to suitable consistency and processed to nanofibrillar cellulose at the site of use.

Conventional pulp drying methods can be used in the drying of the modified cellulose to the desired dry matter content for dispatch. Water can be removed mechanically by a belt filter press or a pressure filter. The modifed cellulose pulp can be transported in the dry matter obtained by mechanical dewatering. The dry matter content where the modified pulp will be transported can ultimately be reached by evaporation.

Modification of cellulose to increase the susceptibility of fibers to disintegration is chemical modification to make derivatized cellulose selected from anionization and cationization.

At the location of use, the modified cellulose is suspended to the consistency suitable for processing it to the nanofibrillar cellulose by means of a disintegrating device and other equipment at the location. The produced nanofibrillar cellulose can be further diluted from the production concentration to the concentration suitable for the end use.

### Description of the Drawings

The method will be described in the following with reference to the accompanying drawings, where
- Fig. 1: illustrates the method according to one embodiment,
- Fig. 2: illustrates the method according to another embodiment,
- Fig. 3: shows the correlation between the salt concentration and the conductivity of the modified cellulose pulp,
- Figs. 4and 5: show the correlation between the conductivity of the modified cellulose pulp and the viscosity of the nanofibrillar cellulose obtained from the modified cellulose pulp,
- Figs. 6 and 7: show examples of apparatuses for manufacturing nanofibrillar cellulose at the location of use, and
- Fig. 8: shows a transportable apparatus for manufacturing nanofibrillar cellulose.

### Detailed Description of Preferred Embodiments

### Modification of cellulose pulp

The fibrous raw material for modification of cellulose is obtained normally from cellulose raw material of plant origin. The raw material can be based on any plant material that contains cellulosic fibers, which in turn comprise microfibrils of cellulose. The fibers may also contain some hemicelluloses, the amount of which is dependent on the plant source. The plant material may be wood. Wood can be from softwood tree such as spruce, pine, fir, larch, douglas-fir or hemlock, or from hardwood tree such as birch, aspen, poplar, alder, eucalyptus or acacia, or from a mixture of softwoods and hardwoods. Non-wood material can be from agricultural residues, grasses or other plant substances such as straw, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo or reed.

One preferred alternative is fibers from non-parenchymal plant material where the fibrils of the fibers are in secondary cell walls. The fibrils originating in secondary cell walls are essentially crystalline with degree of crystallinity of at least 55 %. The source can be wood or non-wood plant material. For example wood fibres are one abundant fibrous raw material source. The raw material can be for example chemical pulp. The pulp can be for example softwood pulp or hardwood pulp or a mixture of these.

The common characteristic of all wood-derived or non-wood derived fibrous raw materials is that nanofibrillar cellulose is obtainable from them by disintegrating the fibers to the level of microfibrils or microfibril bundles.

The modification is performed to fibrous raw material which exists as a suspension in a liquid, that is, pulp.

The modification treatment to the fibers is chemical. In chemical modification the chemical structure of cellulose molecule is changed by chemical reaction ("derivatization" of cellulose), preferably so that the length of the cellulose molecule is not affected but functional groups are added to β-D-glucopyranose units of the polymer. The chemical modification of cellulose takes place at a certain conversion degree, which is dependent on the dosage of reactants and the reaction conditions, and as a rule it is not complete so that the cellulose will stay in solid form as fibrils and does not dissolve in water.

The cellulose in the fibers can be especially ionically charged after the modification, because the ionic charge of the cellulose weakens the internal bonds of the fibers and will later facilitate the disintegration to nanofibrillar cellulose. The ionic charge can be achieved by chemical or physical modification of the cellulose. The fibers can have higher anionic or cationic charge after the modification compared with the starting raw material. Most commonly used chemical modification methods for making an anionic charge are oxidation, where hydroxyl groups are oxidized to aldehydes and carboxyl groups, and carboxymethylation. A cationic charge in turn can be created chemically by cationization by attaching a cationic group to the cellulose, such as quaternary ammonium group.

One preferred modification method is the oxidation of cellulose. In the oxidation of cellulose, the primary hydroxyl groups of cellulose are oxidized catalytically by a heterocyclic nitroxyl compound, for example 2,2,6,6-tetramethylpiperidinyl-1-oxy free radical, "TEMPO". These hydroxyl groups are oxidized to aldehydes and carboxyl groups. Thus, part of the hydroxyl groups that are subjected to oxidation can exist as aldehyde groups in the oxidized cellulose, or the oxidation to carboxyl groups can be complete.

The consistency of the pulp can vary according to the modification method. For example in the catalytic oxidation of cellulose, the consistency is normally 1-4 wt-%. However, in the modification, higher consistencies in the MC (medium consistency) range (up to 12 wt-%, preferably 8-12%, or even higher than 12%) can be used to reduce the amount of water needed. For example it has been found that cellulose can be oxidized catalytically at pulp initial consistency of 8-12% with good selectivity. The consistency values given above represent the starting consistency of the pulp. The consistency of the pulp may change during the modification process for example due to materials added in course of the process.

As a result of the modification, fibers in the pulp will contain cellulose that is more susceptible to fibrillation (disintegration to fibrils) than before the modification, that is, the product can be called "easily fibrillated pulp".

The pulp where the cellulose is chemically modified can be characterized by degree of substitution or content of chemical groups. For pulp modified by catalytic oxidation, the following values can be given:
- anionicity between 0.5 - 1.4 meq/g, preferably 0.7 - 1.1 meq/g (corresponding to carboxylate content of 500 - 1400 µmol/g, preferably 700 - 1100 µmol/g).
- low chloride content of the pulp < 0.5 g/kg, preferably < 0.15 g/kg, which is most conveniently measurable by measuring the conductivity.

All values are based on the amount of dried pulp.

In the case of carboxymethylated cellulose, the degree of substitution can be in the range of 0.05 - 0.3, preferably 0.10 - 0.25. In the case of cationized cellulose, the degree of substitution can be 0.05 - 0.8, preferably 0.1-0.45.

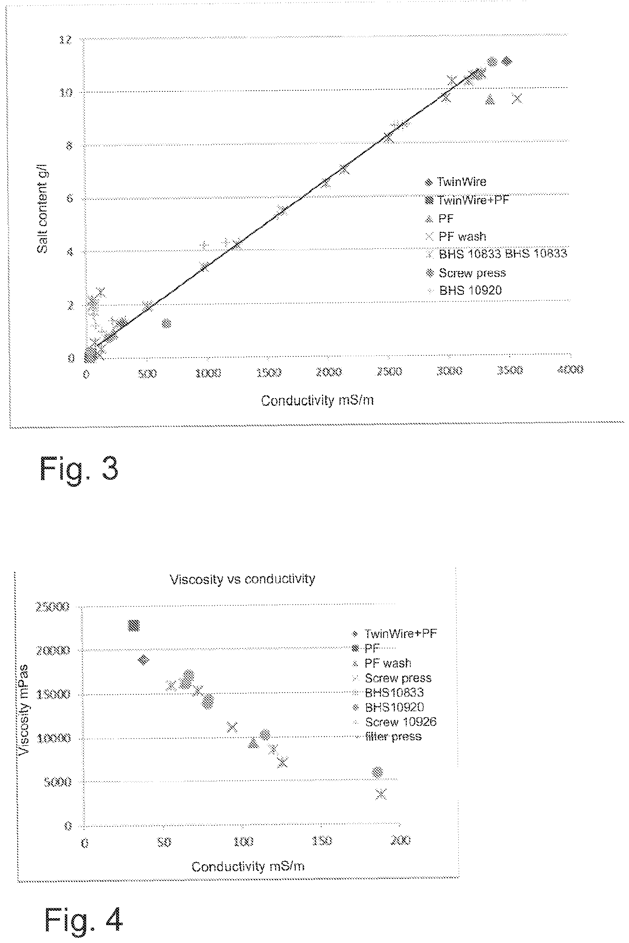

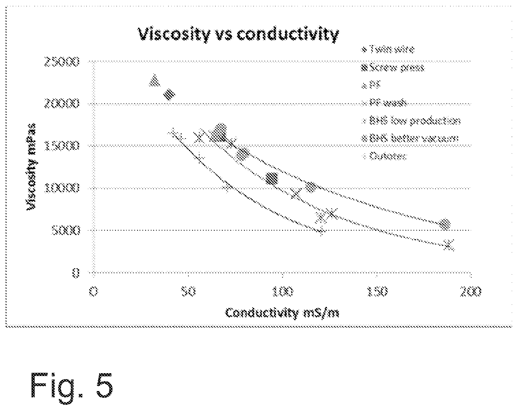

Conductivity measurement at 2.5% consistency of the modified pulp describes very well the washing efficiency or degree of washing of the pulp, which is illustrated by fig. 3. In addition there is a clear correlation between conductivity and fibrillation efficiency, as is shown by Figs. 4 and 5.

The dry matter content of "TEMPO" oxidized pulp after washing stages is typically between 20-25%. Pulp is diluted in pulper to 2.5% consistency by using tap water before the fibrillation stage. Conductivity is typically measured at fibrillation consistency, in this case at 2.5%. Sample is mixed carefully before conductivity measurement. Measurement is done using HACH HQd laboratory meter and the result is given in unit mS/m. (S=Siemens).

Thus, it has been found that when the salt contained in the modified cellulose pulp after the catalytic oxidation (with heterocyclic nitroxyl compounds like "TEMPO" as catalyst) is reduced, the fibers of the modified cellulose pulp can be more easily disintegrated to nanofibrillar cellulose. The quality of the modified cellulose used for making nanofibrillar cellulose can thus be characterized with the conductivity. The measured conductivity of the modified cellulose pulp, when suspended at a consistency of 2.5 wt-% in deionized water, is below 200 mS/m, preferably below 150 mS/m, and most preferably below 100 mS/m. The conductivity values as low as below 50 mS/m can even be attained by washing, if very high quality modified pulp is made. The conductivity values measured in the above mentioned way can be used also to characterize carboxymethylated cellulose, which also contains salt after the modification, but the conductivity can be used as a quality standard in general for all modified cellulose pulp grades, including cationized cellulose.

The conductivity is determined in deionized water at a fixed consistency so that the ions of water do not interfere with the result and the values give a certain standard exclusively for the modified cellulose pulp transported to the user. The conductivity of the suspension before the fibrillation will be dependent on the consistency of the cellulose pulp and on the water used at the location.

### Transport of modified cellulose

After the modification, the fibers containing the modified cellulose are transported to another location from the manufacturing location. The pulp obtained after the modification is set to suitable dry matter content in connection with washing or after the washing to reduce the transportation costs. The dry matter content of the pulp is 20 - 60 wt-% for transport. Prior to setting the final dry matter content of transporting, the pulp is washed in one or more steps to remove the chemical residues of the modification process and to reduce the conductivity, which has proved important. The setting of the final dry matter content of transporting thus comprises dewatering by removal of the washing water together with residual substances entrained by the washing water, such as dissolved salts. After washing, the dry matter content can be increased further by evaporation.

The dry matter content of 20 - 60 wt-% is suitable for transport, because the processing costs increase with the amount of water which is to be removed from the modified pulp, especially in higher dry matter contents. The range of 20 - 60 wt-% is especially suitable for modified cellulose pulp where the cellulose is catalytically oxidized.

In general, the cellulosic fibers of the modified cellulose pulp can be dewatered more easily than strongly hydrophilic nanofibrillar cellulose, irrespective of the modification method and the grade of the modified cellulose pulp.

The pulp is modified moderately and is not disintegrated mechanically before the transport. The SR number (Schopper-Riegler) of such pulp is typically below 20, which characterizes the easy dewaterability of the pulp and is a typical value for unbeaten pulp.

For the transport of the modified cellulose pulp, any means of transport conventionally used for pulp can be used. The modified cellulose pulp can be transported in closed rigid containers, especially in shipping containers, or in bags, especially so called big bags, also known as FIBC /flexible intermediate bulk container). If the dry matter content is 60 wt-% or more, the modified cellulose pulp can be transported in bales. The transport can take place by road vehicles, trains or ships, or even as air freight.

### Nanofibrillar cellulose manufacture

The modified cellulose in fibrous form is transported to the location of use, where it is made to nanofibrillar cellulose.

Nanofibrillar cellulose (NFC) refers to a collection of isolated cellulose microfibrils or microfibril bundles derived from cellulose raw material. Nanofibrillar cellulose has typically a high aspect ratio: the length might exceed one micrometer while the number-average diameter is typically below 200 nm. The diameter of nanofibril bundles can also be larger but generally less than 5 µm. The smallest nanofibrils are similar to so called elementary fibrils, which are typically 2-12 nm in diameter. The dimensions of the fibrils or fibril bundles are dependent on raw material and disintegration method. The nanofibrillar cellulose may also contain some hemicelluloses; the amount is dependent on the plant source. Mechanical disintegration of nanofibrillar cellulose from the fibers of the modified cellulose (easily fibrillated pulp) is carried out with suitable equipment such as a refiner, grinder, homogenizer, colloider, friction grinder, ultrasound sonicator, fluidizer such as microfluidizer, macrofluidizer or fluidizer-type homogenizer. The disintegration method is to some extent dependent on the modification method and conversion degree of the cellulose.

At the location of use, the fibers of the modified cellulose are diluted to suitable consistency, which is dependent on the disintegration method. The starting concentration of the pulp in most cases is between 1 - 5%. The NFC issues from the disintegration at approximately the same concentration as the starting pulp. Thus, at the site of use, prior to the disintegration, the fibers of modified cellulose are preferably diluted to the same concentration as is desired for the NFC of the end application. However, it is possible that the concentration of NFC obtained from the disintegration is adjusted for the end use. It is for example possible that the fibers are disintegrated at higher consistency than the final use concentration of the NFC, and the NFC obtained from the disintegration is diluted to the final use concentration.

The energy demand of the easily fibrillated pulp (expressable as kWh/ton or correspondingr variables) to reach the same target level of fibrillation is lower with modified pulp, compared with the unmodified pulp from the same batch and processed at the same consistency. In some cases the unmodified pulp cannot even be disintegrated to nanofibrillar cellulose. As mentioned before, the conductivity of the modified cellulose pulp influences the fibrillation result.

The nanofibrillar cellulose can also be characterized through some rheological values. NFC forms a viscous gel, "hydrogel" when dispersed in water already at relatively low concentrations (1-2 wt-%). A characteristic feature of the NFC is its shear thinning behaviour in aqueous dispersion, which is seen as a decrease in viscosity with increasing shear rate. Further, a "threshold" shear stress must be exceeded before the material starts to flow readily. This critical shear stress is often called the yield stress. The viscosity of the NFC can be best characterized by zero-shear viscosity, which corresponds to the "plateau" of constant viscosity at small shearing stresses approaching zero.

The zero-shear viscosity of the NFC measured with a stress controlled rotational rheometer at a concentration of 0.5% (aqueous medium) can vary within wide boundaries, depending on the modification method and conversion degree, and it is typically between 1000 and 100000 Pa·s, preferably 5000 and 50000 Pa·s. The yield stress of the NFC determined by the same method is between 1 and 50 Pa, preferably in the range of 3 - 15 Pa.

### Practical examples

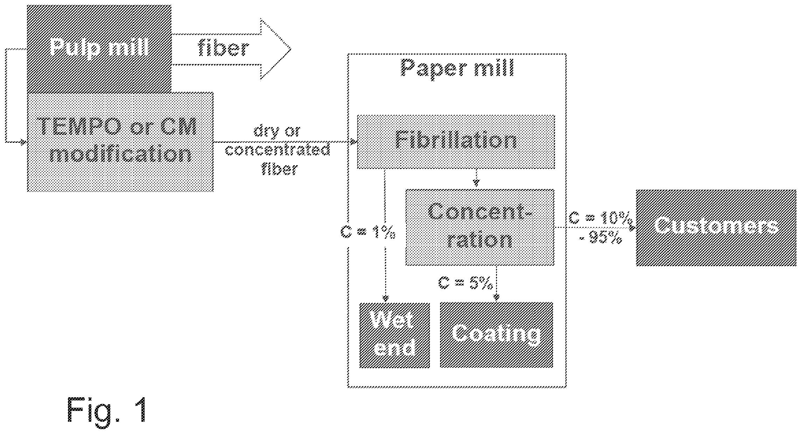

Fig. 1 illustrates the method together with alternative uses of the NFC. The manufacturing location is a pulp mill that produces for example chemical pulp for cellulosic raw material. The chemical pulp, which is manufactured with known chemical pulping methods, is dispatched to various destinations (arrow "fiber"). The chemical pulp is also modified at the pulp mill to make easily fibrillated pulp, where fibers contain modified cellulose (process "TEMPO or CM modification"). Although catalytic oxidation (TEMPO) and carboxymethylation (CM) are examples of the modification, any chemical, physical or enzymatic modification method can be used which produces easily fibrillated pulp.

The pulp is dried or concentrated to desired dry matter content prior it is dispatched to the destination, location of use. The arrow "dry or concentrated fiber" represents the transport of this dried or concentrated easily fibrillated pulp. The transport can take place by road, railroad or sea or by combination of these modes of transport. The location of use in this case is a paper mill where the easily fibrillated pulp is disintegrated to NFC by "on-site" fibrillation (process "Fibrillation"). At the paper mill the NFC can be processed further depending on the end use at the paper mill. For wet end addition to the furnish for making paper, the NFC can stay at the original concentration obtained from the disintegration (in this example 1 wt-%) and for adding the NFC to paper coating composition, it can be concentrated from the original concentration (in this example to 5 wt-%).

In addition to using the on-site manufactured NFC at the location of use, the paper mill, it can be dispatched from there further to customers, for example in a concentrated state (10 - 95 wt-%). These other customers may use the NFC to other purposes than for paper manufacture, and/or they can be paper mills using the NFC for paper manufacture.

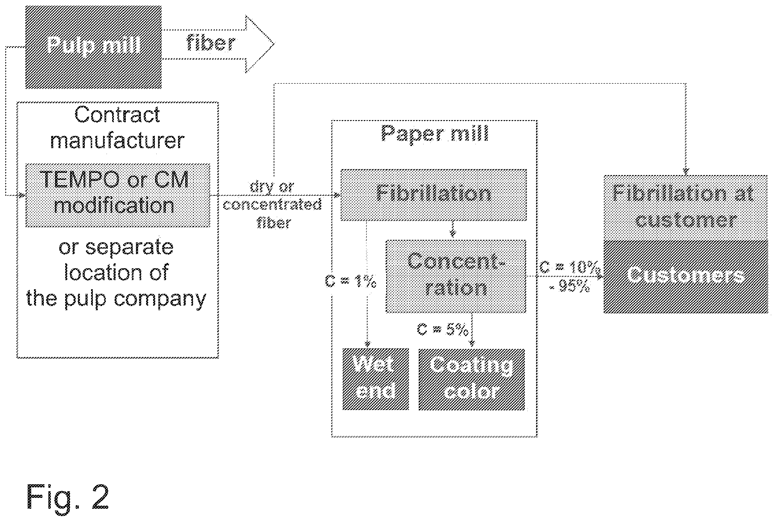

Fig. 2 differs from Fig. 1 in that the pulp produced by the pulp mill is modified in a separate location which is the manufacturing location for the easily fibrillated pulp. This manufacturing location dispatches the easily fibrillated pulp to the location of use, the paper mill, in a same way as in Fig. 1, but additionally the manufacturing location dispatches the easily fibrillated pulp directly to other customers, which may use the "on-site" fibrillated NFC to other purposes than for paper manufacture.

It is also possible that the manufacturing location is a pulp mill as in Fig. 1, and it dispatches the easily fibrillated pulp directly to customers, which may use the "on-site" fibrillateded NFC to other purposes than for paper manufacture.

The dispatch in Figs. 1 and 2 can take place by road, railway or sea in a suitable vehicle or vessel.

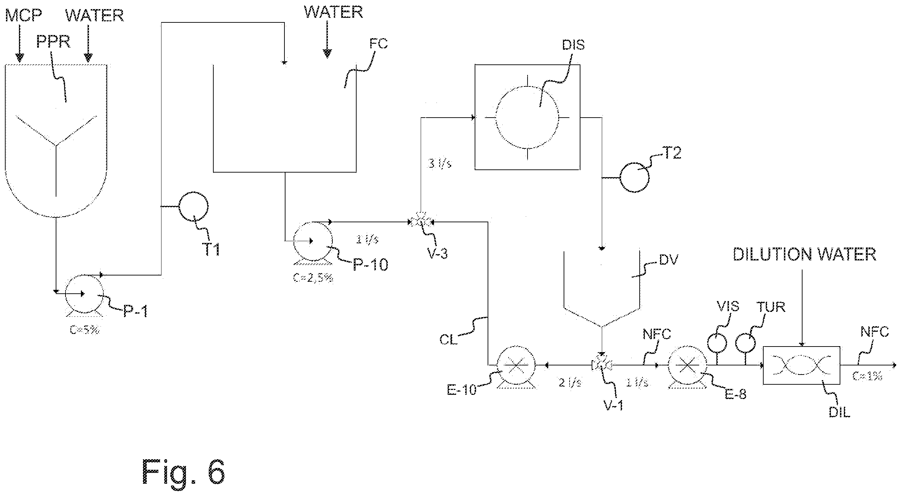

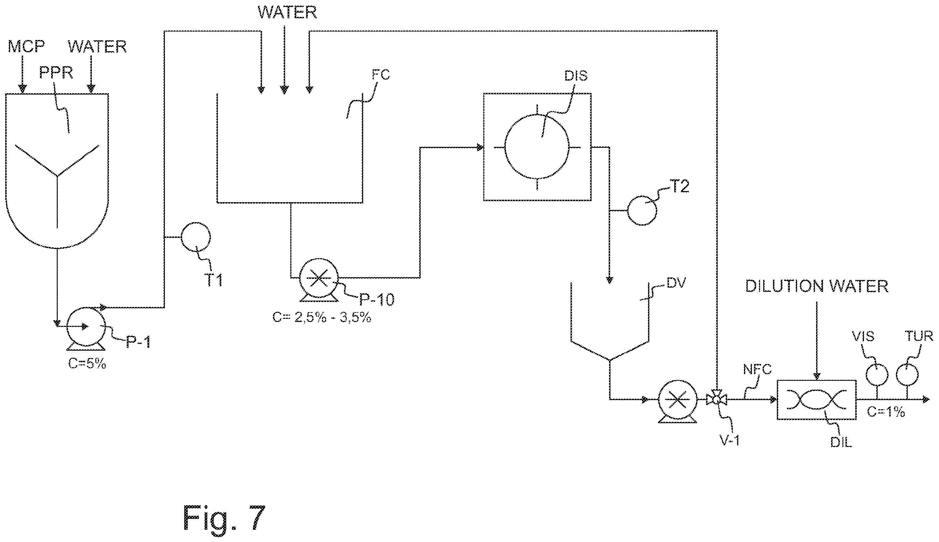

Figures 6 and 7 show the setup of the manufacturing apparatus at the location of use for two alternative modes for making the nanofibrillar cellulose, Fig. 6 for the continuous mode and Fig. 7 for the batch mode.

The manufacturing apparatus installed at the location of use comprises a pulper PPR, a disintegrating device DIS, a discharge vessel DV, a conduit connecting the pulper to the disintegrating device, a conduit connecting the disintegrating device to the discharge vessel, and a pump (P-1) for feeding modified cellulose pulp from the pulper PPR to the disintegrating device DIS. These elements are common for the continuous mode and the batch mode.

The apparatus can also have a feeding chest FC, which acts as a intermediate buffer container to ensure continuous feed of the pulp to the disintegrating device DIS in the continuous mode. In this case the apparatus also comprises a conduit connecting the feeding chest to the disintegrating device and and a pump (P-10) for feeding modified cellulose pulp from the feeding chest to the disintegrating device. In the pulper PPR, the modified cellulose pulp is pulped and diluted to a consistency of about 6 - 7 wt-%. The final dilution to the disintegration consistency can take place in the feeding chest FC, to which dilution water is also added, or in any place between the pulper and the disintegrating device.

In the continuous mode, the feeding chest FC can be replaced by another pulper. The pulpers feed alternately the pulp to the disintegrating device DIS to ensure even supply to the disintegrating process.

In the batch mode (Fig. 7), there is also a circulation arrangement for returning the pulp passed through the disintegrating device back to the disintegrating device. The continuous mode (Fig. 6) can also have a circulation arrangement (circulation line CL) which returns a portion of the pulp passed through the disintegrating device DIS back to the disintegrating device. This circulation ratio (returned portion/total flow) can be adjusted. Thus, in both modes the apparatus comprises a circulation conduit connecting the outlet of the discharge vessel DV to the inlet of the disintegrating device DIS (Fig. 6, continuous) or to the feeding chest FC (Fig. 7, batch). In Fig. 7, the valveV-1 after a discharge pump (E-8) is closed to the exit direction and it is open to the circulation direction. When a sufficient number of passes through the disintegrating device has been reached, the circulation direction is closed and the exit direction is opened, and the nanofibrillar cellulose NFC exits the disintegrating process pumped by the discharge pump. In Fig. 6, there is a three-way connection V-1 after the discharge vessel DV, and there is a pump (E-8) in the discharge conduit which leads out of the disintegrating process and a pump (E-10) in the circulation conduit that connects the outlet of the discharge vessel DV to the inlet of the disintegrating vessel DIS. The circulation ratio can be adjusted by adjusting the output of the pumps E-8 and E-10.

In the continuous mode of Fig. 6, the circulation ratio is 10 - 90 %, preferably 30 - 70%. In the circulation ratio of 67%, 2/3 of the total flow is returned back, which means 3 passes through the disintegrating device DIS. However, the continuous mode also includes the alternative where the pulp suspension is passed once through the disintegrating device DIS, which is possible especially with high-quality modified pulp of low conductivity.

The apparatus both in Figs. 6 and 7 also comprises a dilution device DIL connected to the outlet of the discharge vessel DV for diluting the nanofibrillar cellulose to the use concentration. This device is not necessarily needed if the nanofibrillar cellulose exits the disintegrating process at the use concentration, or if it is to be diluted later, just before the use.

In the apparatus according to Fig. 6 or Fig. 7 the disintegrating device DIS can be a disperser-type device, where the modified cellulose pulp flows through several counter-rotating rotors in such a way that the material is repeatedly subjected to shear and impact forces by the effect of the different counter-rotating rotors, or it can be a homogenizer, where the modified cellulose pulp is subjected to homogenization by the effect of pressure.

The apparatus can also comprise instrumentation for measuring some variables of the modified cellulose pulp and/or the nanofibrillar cellulose NFC which characterize the efficiency of the fibrillation and the quality of the product. This instrumentation comprises a temperature sensor T1 before the disintegrating device DIS and a temperature sensor T2 after the disintegrating device DIS for measuring the temperature difference T2-T1, which equals the temperature rise during the disintegration and is a measure of the efficiency of the process, and it can be also used for the process control. To measure the properties of the nanofibrillar cellulose itself, the apparatus also comprises an on-line turbidometer TUR which can be calibrated to the modified cellulose pulp grade that is processed and consequently to the nanofibrillar cellulose grade that is produced. The apparatus can also comprise an on-line viscometer VIS based on pressure difference. These measuring instruments are placed in a suitable place after the disintegrating device DIS, preferably to the place where the final product flows. In fig. 6, these on-line instruments are placed before the dilution device DIL and in Fig. 7, the instruments are placed after the dilution device DIL. Both on-line instruments are not necessarily needed. The customer can choose between an on-line turbidometer TUR an on-line viscometer VIS, according to the properties of the NFC important in the use of the NFC.

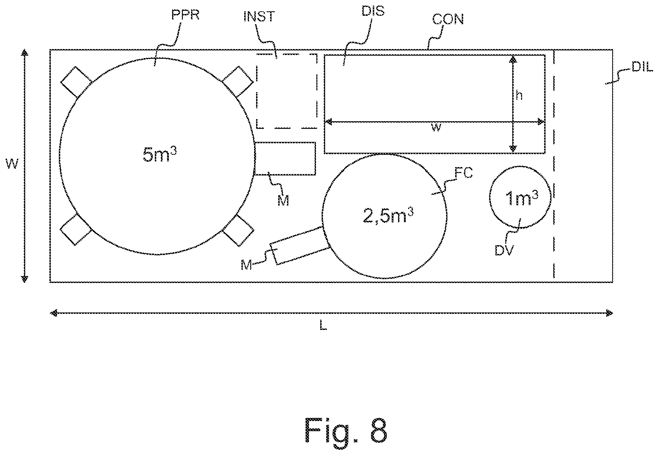

Fig. 8 is an example how the apparatus can be transported to the location of use. It is possible to send the apparatus to the user in the same transport as the modified cellulose pulp or separately. A compact transport container is used. Fig. 8 shows, in horizontal section, a standard DC (dry cargo) shipping container CON (ISO shipping container), with the length L of 20 ft and width W x height of 8 ft, corresponding to the nominal length x width x height of 6m x 2.4m x 2.4m. Inside the container CON of these dimensions, a pulper PPR, a feeding chest FC, a disintegrating device DIS, and a discharge vessel DV can be packed. The pulper PPR and the feeding chest FC comprise also the mixer motor M. If the apparatus comprises two pulpers and no feeding chest, like in one alternative of the continuous mode apparatus, the pulpers can be smaller. A dilution device DIL can also be packed in the container CON. The container can also include the instrumentation, such as the temperature sensors, on-line turbidometer and on-line viscometer, all packed in an instrument box INST. If the disintegrating device DIS is a disperser-type device that has several counterrotating rotors, its general shape is a cylinder with diameter w and height h, as shown in Fig. 8.

The volumes of the various vessels in the container CON are given only as one practical example.

Thus, the container CON shown in Fig. 8 comprises the elements for installing the apparatus in the setup of Fig. 6 or Fig. 7, or in any other setup. Customers that use the NFC to other purposes than for papermaking can be construction companies, composite material manufacturers, pharmaceutical companies, cosmetics manufacturers, food companies, oil companies, or coating material manufacturers. The customers and the related uses are not limited to the listed customers, but the modified cellulose pulp can be dispatched anywhere where there is need to use nanofibrillar cellulose.

## Claims

1. A method for making modified cellulose products, comprising
- processing cellulose pulp to modified cellulose pulp, wherein the processing of cellulose pulp takes place by chemical modification, where anionized or cationized cellulose is obtained, at a manufacturing location, preferably at a pulp mill, to increase the susceptibility of fibers to disintegration, **characterized by**
- washing the modified cellulose pulp before transporting the modified cellulose pulp so that the measured conductivity of the modified cellulose pulp after washing, when suspended at a consistency of 2.5 wt-% in deionized water, is below 200 mS/m,
- setting the washed modified cellulose pulp to a suitable dry matter content, wherein the dry matter content of the modified cellulose pulp is set to 20 - 60 wt-%,
and
- transporting the modified cellulose pulp at set dry matter content to a location of use, where the modified cellulose pulp is disintegrated to nanofibrillar cellulose having a zero-shear viscosity measured with a stress controlled rotational rheometer at a concentration of 0.5% (aqueous medium) between 1000 and 100000 Pa·s.

2. The method according to claim 1, **characterized in that** the chemical modification is selected from catalytic oxidation of cellulose, where carboxyl groups are produced in the cellulose, carboxymethylation of cellulose, and cationization of cellulose.

3. The method according to any of the preceding claims, **characterized in that** the modified cellulose pulp is disintegrated to nanofibrillar cellulose having a zero-shear viscosity measured with a stress controlled rotational rheometer at a concentration of 0.5% (aqueous medium) between 5000 and 50000 Pa·s.

4. The method according to any of the preceding claims, **characterized in that** the modified cellulose pulp is washed before transporting the modified cellulose pulp by diluting it with washing water, and the setting of the dry matter content comprises concentrating the modified cellulose pulp by mechanically removing the washing water.

5. The method according to claim 4, **characterized in that** the setting of the dry matter content comprises increasing the dry matter content further by evaporation after washing.

6. The method according to any of the preceding claims, **characterized in that** the modified cellulose is washed, and the measured conductivity of the modified cellulose pulp after washing, when suspended at a consistency of 2.5 wt-% in deionized water, is below 150 mS/m, and preferably below 100 mS/m.

7. The method according to any of the preceding claims, **characterized in that** the modified cellulose pulp is transported in rigid containers or in bags, especially in big bags (FIBC-type bags).

8. The method according to any of the preceding claims, **characterized in that** it comprises:
diluting the modified cellulose pulp at the location of use from the increased dry matter content to a disintegrating consistency, and
disintegrating the modified cellulose pulp at the disintegrating consistency to nanofibrillar cellulose, the method further comprising:
mixing the modified cellulose pulp with water in a pulper,
feeding the modified cellulose pulp from the pulper to a disintegrating device, treating the modified cellulose pulp in the disintegrating device which disintegrates the modified cellulose pulp to nanofibrillar cellulose, and
collecting the nanofibrillar cellulose issuing from the disintegrating device.

9. The method according to claim 8, **characterized in that** the nanofibrillar cellulose is produced in a continuous mode, preferably wherein during the continuous mode part of the output of the disintegrating device is circulated to the feed of the disintegrating device.

10. The method according to claim 8, **characterized in that** the nanofibrillar cellulose is produced in a batch mode.

11. A modified cellulose product which is modified cellulose pulp, which is chemically modified cellulose pulp where the cellulose is anionized or cationized cellulose, where the fibers have increased susceptibility to disintegration as a result of the modification, and wherein the measured conductivity of the modified cellulose pulp, when suspended at a consistency of 2.5 wt-% in deionized water, is below 200 mS/m, packed in a rigid container or in a bag, especially in a big bag (FIBC-type bag), in a dry matter content of 20-60 wt-%.

12. The modified cellulose product according to claim 11, **characterized in that** the anionized cellulose is oxidized cellulose containing carboxyl groups, or carboxymethylated cellulose.

13. The modified cellulose product according to any of the preceding claims 11-12, **characterized in that** the measured conductivity of the modified cellulose pulp, when suspended at a consistency of 2.5 wt-% in deionized water, is below 150 mS/m, and most preferably below 100 mS/m.

## Patentansprüche

1. Verfahren zur Herstellung von modifizierten Celluloseprodukten, umfassend:
- Verarbeiten von Cellulosebrei zu modifiziertem Cellulosebrei, wobei das Verarbeiten von Cellulosebrei durch chemische Modifikation erfolgt, wodurch anionisierte oder kationisierte Cellulose erhalten wird, an einem Herstellungsort, vorzugsweise in einem Zellstoffwerk, zur Erhöhung der möglichen Zerfallsanfälligkeit von Fasern, **gekennzeichnet durch**:
- Waschen des modifizierten Cellulosebreis vor dem Transport des modifizierten Cellulosebreis, so dass die gemessene Leitfähigkeit des modifizierten Cellulosebreis nach dem Waschen, wenn bei einer Konsistenz von 2,5 Gew.-% in deionisiertem Wasser suspendiert, unter 200 mS/m liegt,
- Festlegen des gewaschenen modifizierten Cellulosebreis auf einen geeigneten Trockensubstanzgehalt, wobei der Trockensubstanzgehalt des modifizierten Cellulosebreis auf 20 - 60 Gew.-% festgelegt wird,
und
- Transportieren des modifizierten Cellulosebreis mit dem festgelegten Trockensubstanzgehalt an einen Einsatzort, wo der modifizierte Cellulosebrei zu nanofibrillärer Cellulose mit einer Nullscherviskosität, gemessen mit einem spannungsgesteuerten Rotationsrheometer bei einer Konzentration von 0,5% (wässriges Medium) zwischen 1.000 und 100.000 Pa s, zersetzt wird.

2. Verfahren nach Anspruch 1, **dadurch gekennzeichnet, dass** die chemische Modifikation aus der katalytischen Oxidation von Cellulose ausgewählt ist, wobei Carboxylgruppen in der Cellulose, Carboxymethylierung von Cellulose und Kationisierung von Cellulose erzeugt werden.

3. Verfahren nach einem der vorstehenden Ansprüche, **dadurch gekennzeichnet, dass**, der modifizierte Cellulosebrei zu nanofibrillärer Cellulose mit einer Nullscherviskosität, gemessen mit einem spannungsgesteuerten Rotationsrheometer bei einer Konzentration von 0,5% (wässriges Medium) zwischen 5.000 und 50.000 Pa·s, zersetzt wird.

4. Verfahren nach einem der vorstehenden Ansprüche, **dadurch gekennzeichnet, dass** der modifizierte Cellulosebrei vor dem Transport des modifizierten Cellulosebreis gewaschen wird, durch Verdünnen mit Waschwasser, und das Festlegen des Trockensubstanzgehaltes das Konzentrieren des modifizierten Cellulosebreis durch mechanische Entfernung des Waschwassers umfasst.

5. Verfahren nach Anspruch 4, **dadurch gekennzeichnet, dass** das Festlegen des Trockensubstanzgehalts eine weitere Erhöhung des Trockensubstanzgehaltes durch Verdunstung nach dem Waschen umfasst.

6. Verfahren nach einem der vorstehenden Ansprüche, **dadurch gekennzeichnet, dass** die modifizierte Cellulose gewaschen wird und die gemessene Leitfähigkeit des modifizierten Cellulosebreis nach dem Waschen, wenn bei einer Konsistenz von 2,5 Gew.-% in deionisiertem Wasser suspendiert, unter 150 mS/m und vorzugsweise unter 100 mS/m liegt.

7. Verfahren nach einem der vorstehenden Ansprüche, **dadurch gekennzeichnet, dass** der modifizierte Cellulosebrei in starren Behältern oder in Säcken, insbesondere in Big-Bags (FIBC-Säcken), transportiert wird.

8. Verfahren nach einem der vorstehenden Ansprüche, **dadurch gekennzeichnet, dass** es umfasst:
- Verdünnen des modifizierten Cellulosebreis am Einsatzort vom erhöhten Trockensubstanzgehalt auf eine zersetzende Konsistenz, und
- Zersetzen des modifizierten Cellulosebreis auf die zersetzende Konsistenz zu nanofibrillärer Cellulose, das Verfahren weiterhin umfassend:
- Mischen des modifizierten Cellulosebreis mit Wasser in einem Pulper,
- Zuführen des modifizierten Cellulosebreis aus dem Pulper zu einer Zersetzungsvorrichtung,
- Behandeln des modifizierten Cellulosebreis in der Zersetzungsvorrichtung, um den modifizierten Cellulosebrei zu nanofibrillärer Cellulose zu zersetzen, und
- Sammeln der nanofibrillären Cellulose, die aus der Zersetzungsvorrichtung austritt.

9. Verfahren nach Anspruch 8, **dadurch gekennzeichnet, dass** die nanofibrilläre Cellulose in einem kontinuierlichen Modus hergestellt wird, vorzugsweise so, dass während des kontinuierlichen Modus ein Teil der Abführung der Zersetzungsvorrichtung zur Zuführung der Zersetzungsvorrichtung rückgeführt wird.

10. Verfahren nach Anspruch 8, **dadurch gekennzeichnet, dass** die nanofibrilläre Cellulose im Batch-Verfahren hergestellt wird.

11. Modifiziertes Celluloseprodukt, das modifizierter Cellulosebrei ist, der ein chemisch modifizierter Cellulosezellstoff ist, wobei die Cellulose anionisierte oder kationisierte Cellulose ist, bei der die Fasern durch die Modifikation eine erhöhte Zersetzungsanfälligkeit aufweisen, und wobei die gemessene Leitfähigkeit des modifizierten Cellulosebreis, wenn bei einer Konsistenz von 2,5 Gew.-% in deionisiertem Wasser suspendiert, unter 200 mS/m liegt, verpackt in einem starren Behälter oder in einem Beutel, insbesondere in einem Big-Bag (FIBC-Sack), bei einem Trockensubstanzgehalt von 20-60 Gew.-%.

12. Modifiziertes Celluloseprodukt nach Anspruch 11, **dadurch gekennzeichnet, dass** die anionisierte Cellulose oxidierte Cellulose ist, die Carboxylgruppen oder carboxymethylierte Cellulose enthält.

13. Modifiziertes Celluloseprodukt nach einem der vorstehenden Ansprüche 11-12, **dadurch gekennzeichnet, dass** die gemessene Leitfähigkeit des modifizierten Cellulosebreis, wenn bei einer Konsistenz von 2,5 Gew.-% in deionisiertem Wasser suspendiert, unter 150 mS/m und am meisten bevorzugt unter 100 mS/m liegt.

## Revendications

1. Procédé de fabrication de produits de cellulose modifiée, comprenant
- le traitement de pâte de cellulose en pâte de cellulose modifiée, le traitement de la pâte de cellulose ayant lieu par modification chimique, où la cellulose anionisée ou cationisée est obtenue, au niveau d'un emplacement de fabrication, préférablement au niveau d'un moulin à pâte, pour accroître la sensibilité des fibres à la désintégration, **caractérisé par**
- le lavage de la pâte de cellulose modifiée avant le transport de la pâte de cellulose modifiée afin que la conductivité mesurée de la pâte de cellulose modifiée après lavage, lorsque mise en suspension à une consistance de 2,5 % en pds d'eau désionisée, soit inférieure à 200 mS/m,
- l'ajustement de la pâte de cellulose modifiée lavée à une teneur en matière sèche appropriée, la teneur en matière sèche de la pâte de cellulose modifiée étant fixée à 20 à 60 % en pds, et
- le transport de la pâte de cellulose modifiée à une teneur en matière sèche définie jusqu'à un emplacement d'utilisation, où la pâte de cellulose modifiée est désintégrée en cellulose nanofibrillaire présentant une viscosité sous cisaillement nul mesurée par l'intermédiaire d'un rhéomètre rotationnel à contrainte contrôlée sous une concentration de 0,5 % (milieu aqueux) entre 1 000 et 100 000 Pa•s.

2. Procédé selon la revendication 1, **caractérisé en ce que** la modification chimique est sélectionnée parmi l'oxydation catalytique de cellulose, où des groupes carboxyle sont produits dans la cellulose, la carboxyméthylation de cellulose, et la cationisation de la cellulose.

3. Procédé selon l'une quelconque des revendications précédentes, **caractérisé en ce que** la pâte de cellulose modifiée est désintégrée en cellulose nanofibrillaire présentant une viscosité sous cisaillement nul mesurée par l'intermédiaire d'un rhéomètre rotationnel à contrainte contrôlée sous une concentration de 0,5 % (milieu aqueux) située entre 5 000 et 50 000 Pa•s.

4. Procédé selon l'une quelconque des revendications précédentes, **caractérisé en ce que** la pâte de cellulose modifiée est lavée avant le transport de la pâte de cellulose modifiée en la diluant avec de l'eau de lavage, et l'ajustement de la teneur en matière sèche comprenant la concentration de la pâte de cellulose modifiée en éliminant mécaniquement l'eau de lavage.

5. Procédé selon la revendication 4, **caractérisé en ce que** l'ajustement de la teneur en matière sèche comprend l'augmentation de la teneur en matière sèche de manière supplémentaire par évaporation après lavage.

6. Procédé selon l'une quelconque des revendications précédentes, **caractérisé en ce que** la cellulose modifiée est lavée, et que la conductivité mesurée de la pâte de cellulose modifiée après lavage, lorsque mise en suspension à une consistance de 2,5 % en pds dans de l'eau désionisée, est inférieure à 150 mS/m, et préférablement inférieure à 100 mS/m.

7. Procédé selon l'une quelconque des revendications précédentes, **caractérisé en ce que** la pâte de cellulose modifiée est transportée dans des récipients rigides ou dans des sacs, spécialement dans de grands sacs (sacs de type FIBC).

8. Procédé selon l'une quelconque des revendications précédentes, **caractérisé en ce qu'**il comprend :
la dilution de la pâte de cellulose modifiée au niveau de l'emplacement d'utilisation à partir de la teneur accrue en matière sèche jusqu'à une consistance de désintégration, et
la désintégration de la pâte de cellulose modifiée à la consistance de désintégration en cellulose nanofibrillaire, le procédé comprenant en outre :
le mélange de la pâte de cellulose modifiée avec de l'eau dans une dépulpeuse,
l'alimentation de la pâte de cellulose modifiée à partir de la dépulpeuse jusqu'à un dispositif de désintégration,
le traitement de la pâte de cellulose modifiée dans le dispositif de désintégration qui désintègre la pâte de cellulose modifiée en cellulose nanofibrillaire, et
le recueil de la cellulose nanofibrillaire sortant du dispositif de désintégration.

9. Procédé selon la revendication 8, **caractérisé en ce que** la cellulose nanofibrillaire est produite en un mode continu, préférablement durant le mode continu une partie du produit du dispositif de désintégration est mise en circulation vers l'alimentation du dispositif de désintégration.

10. Procédé selon la revendication 8, **caractérisé en ce que** la cellulose nanofibrillaire est produite en un mode discontinu.

11. Produit de cellulose modifiée qui est de la pâte de cellulose modifiée, qui est de la pâte de cellulose chimiquement modifiée où la cellulose est de la cellulose anionisée ou cationisée, où les fibres présentent une sensibilité accrue à la désintégration en résultat de la modification, et dans lequel la conductivité mesurée de la pâte de cellulose modifiée, lorsque mise en suspension à une consistance de 2,5 % en pds de l'eau désionisée, est inférieure à 200 mS/m, emballé dans un récipient rigide ou dans un sac, spécialement dans un grand sac (sac de type FIBC), selon une teneur en matière sèche de 20 à 60 % en pds.

12. Produit de cellulose modifiée selon la revendication 11, **caractérisé en ce que** la cellulose anionisée est de la cellulose oxydée contenant des groupes carboxyle, ou de la cellulose carboxyméthylée.

13. Produit de cellulose modifiée selon l'une quelconque des revendications précédentes 11 à 12, **caractérisé en ce que** la conductivité mesurée de la pâte de cellulose modifiée, lorsque mise en suspension à une consistance de 2,5 % en pds dans de l'eau désionisée, est inférieure à 150 mS/m, et de manière préférée entre toutes inférieure à 100 mS/m.
